# EUROPEAN PATENT APPLICATION

(11) **EP 2 870 872 A1**
(43) Date of publication of application: **13.05.2015**
(21) Application number: 14190976.2
(22) Date of filing: 30.10.2014
(51) Int. Cl.: A01K 39/014

(54) **Seed tray catcher for bird feeders**

(30) Priority: 07.11.2013 CA 2832667
(71) Applicant: Brome Bird Care Inc., Lac Brome QC J0E 1V0 (CA)
(72) Inventor: Cote, Paul, L., Lac Brome, Québec J0E 1V0 (US)
(74) Representative: Graf Glück Kritzenberger

(57) **Abstract**

A seed tray (20) for a bird feeder to catch seed husks and other debris, the seed tray (20) comprising first and second seed tray members (22, 24) secured together about a pole (18), a first seed tray support (56) located beneath the first and second seed tray members (22, 24), the first seed tray support (56) being slidable along the pole (18) and lockable in a desired position with respect to the pole (18), the first seed tray support (56) engaging with first and second seed tray members (22, 24) to retain the tray members together.

## Description

### FIELD OF THE INVENTION

The present invention relates to bird feeders and more particularly, relates to a seed tray for catching seeds and other debris which is spilled.

### BACKGROUND OF THE INVENTION

The use of bird feeders is widespread and many people have one or more bird feeders to attract different types of birds. Many different types of bird feeders are known in the art ranging from the conventional and inexpensive tube feeder to more sophisticated models which have features such as making them resistant to marauders.

Irrespective of the type of bird feeder, a common problem is seed and other material which is spilled from the feeder by the birds when feeding. With some forms of feed such as sunflower seeds, the bird will remove only the kernel and leave the remaining husks, usually dropping them on the ground. This debris is unsightly and also tends to destroy any vegetation upon which it falls.

The use of seed catcher trays is known in the art and there have been many proposals. Frequently, the seed trays are suspended from the bottom of a hanging bird feeder. Alternatively, in the case of pole mounted bird feeders, the tray may be attached to the pole in one manner or another. Usually, they are attached such that they must be emptied by hand and can only be removed over the top of the pole.

### SUMMARY OF THE INVENTION

It is an object of the present invention to provide a seed catcher tray which can be easily assembled and disassembled and which performs multi functions.

According to one aspect of the present invention, there is provided a seed tray comprising first and second seed tray members, the first and second seed tray members being securable together about the pole, and a first seed tray support located beneath the first and second seed tray members, the first seed tray support being slidable along the pole and lockable in a desired position with respect to the pole, the first seed tray support engaging with the first and second seed tray members to retain the first and second seed tray members together.

In the preferred embodiment, the seed tray is made up of first and second seed tray halves. However, it is within the scope of this invention to utilize more than two such members. Thus, one could utilize three members, each comprising a third of the total tray or still further, four such members could be utilized to divide the tray into quarters. The number of portions forming the total seed tray may thus vary and are within the scope of the claims.

The seed tray members may be formed of any suitable material with a plastic material being preferred. The material will be weather resistant.

The invention includes the use of collars to secure the seed tray members in a desired position. Preferably, there is provided an upper collar and a lower collar although it is understood that only a single collar could be utilized.

The seed tray preferably has a size sufficient to catch at least the majority of debris from the bird feeder. For most uses, it is contemplated that a diameter of between 12 to 24 inches is sufficient.

The seed tray will retain the debris from the bird feeder and indeed, provides a place that other animals such as squirrels, chipmunks and the like may feed off the seed shells or husks. This would aid in disposal thereof.

The seed tray will include apertures situated at its lowest point such that rain will automatically drain through.

### BRIEF DESCRIPTION OF THE DRAWINGS

Having thus generally described the invention, reference will be now made to the accompanying drawings illustrating an embodiment thereof, in which:
Figure 1 is a perspective view of a bird feeder, pole and seed tray mounted thereon;

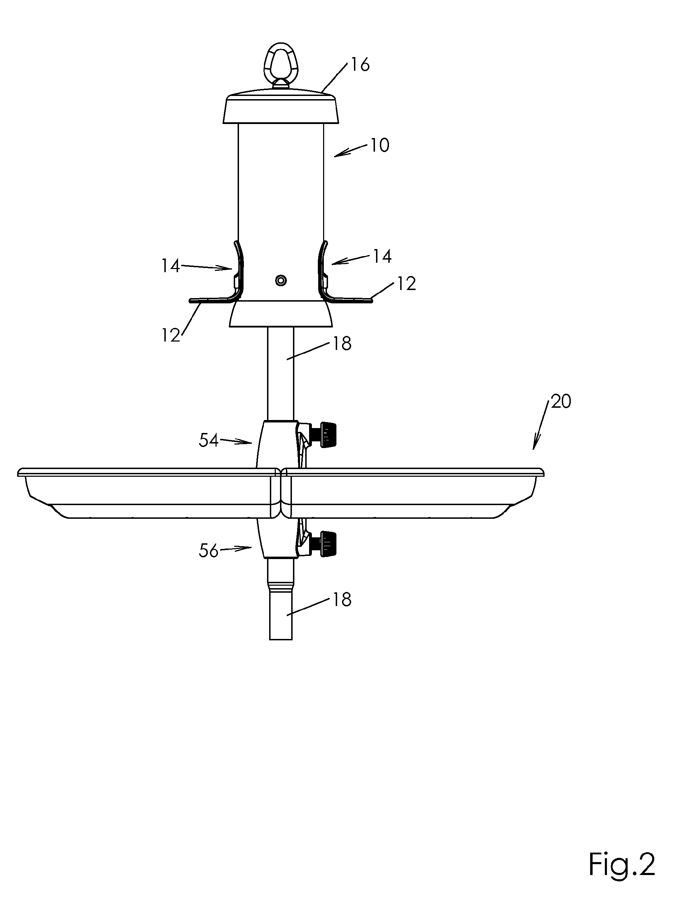

Figure 2 is a side elevational view thereof;

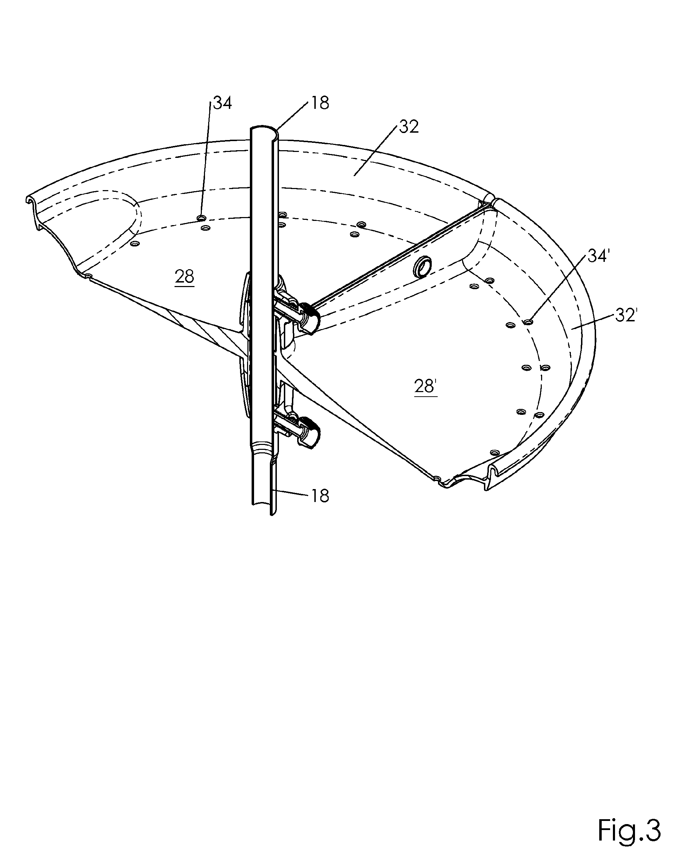

Figure 3 is a perspective sectional view of the seed tray mounted on the pole;

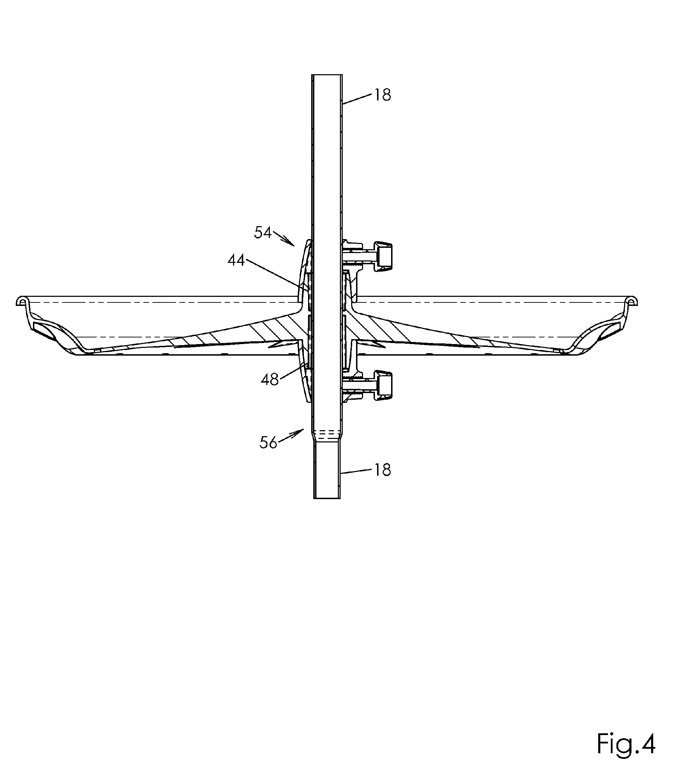

Figure 4 is a side sectional view thereof;

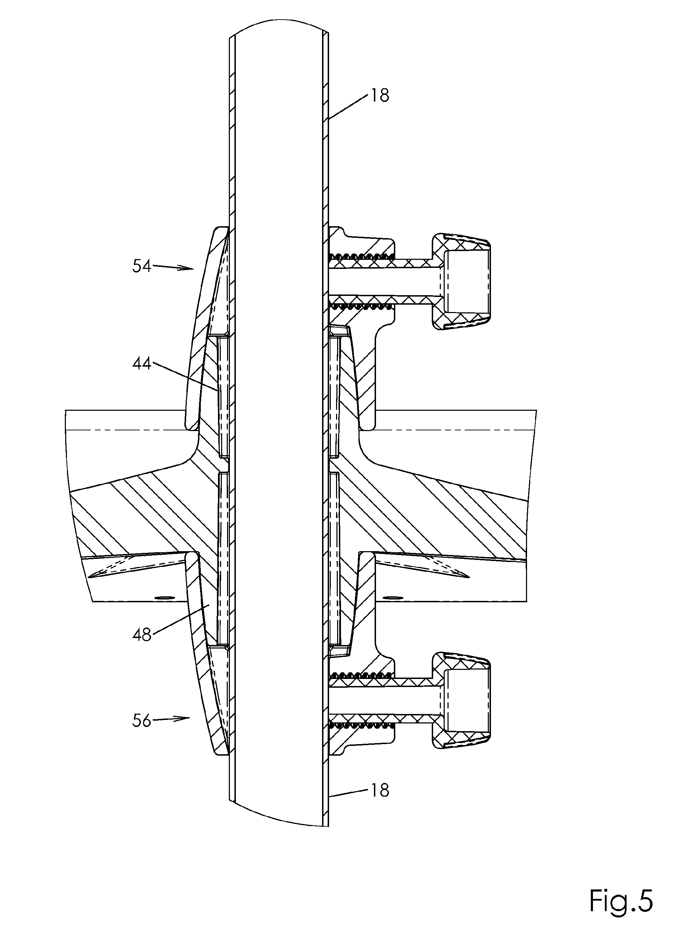

Figure 5 is an enlarged view illustrating the use of the seed tray support members;
Figure 6 is a perspective sectional view illustrating the positioning of the seed tray on a pole;

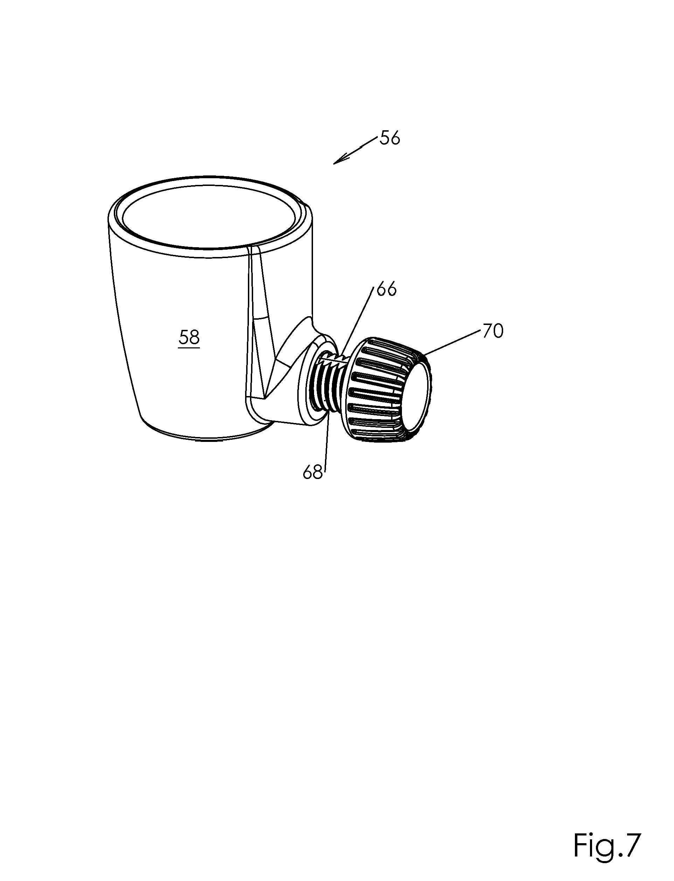

Figure 7 is a perspective view of one of the seed tray support members;

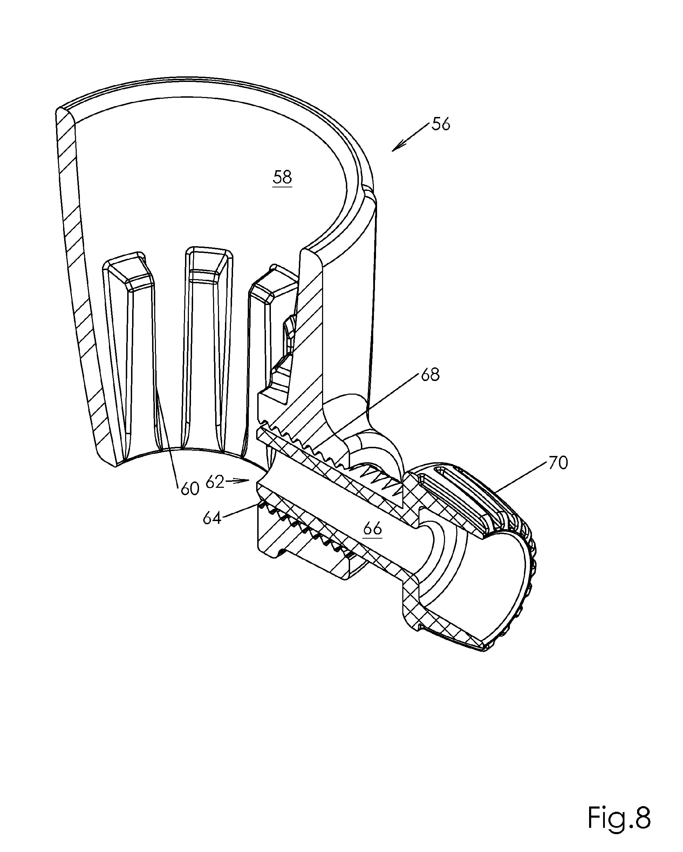

Figure 8 is a cross sectional view thereof in an unlocked position;

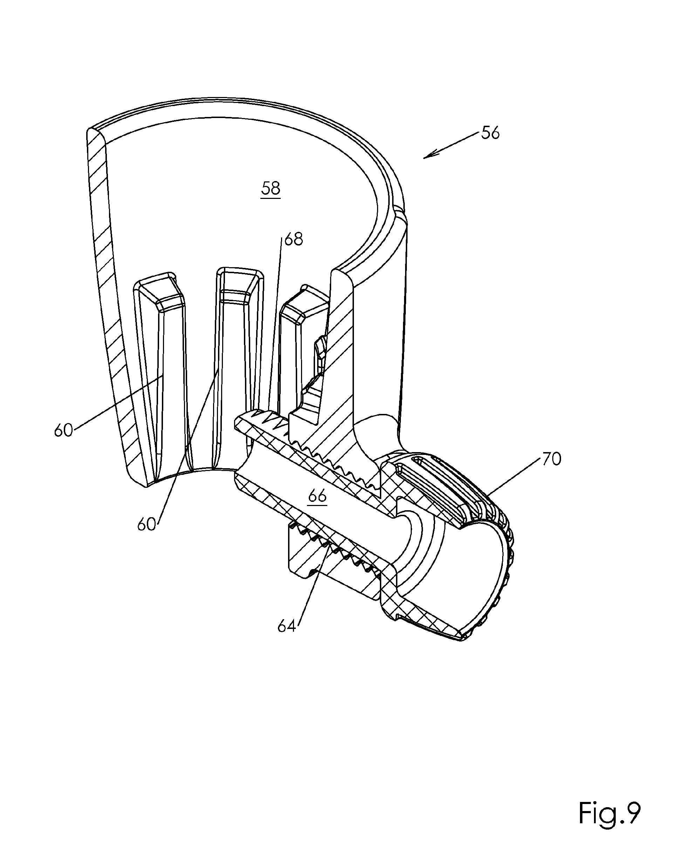

Figure 9 is a perspective cross sectional view showing movement of the set screw to a locking position;

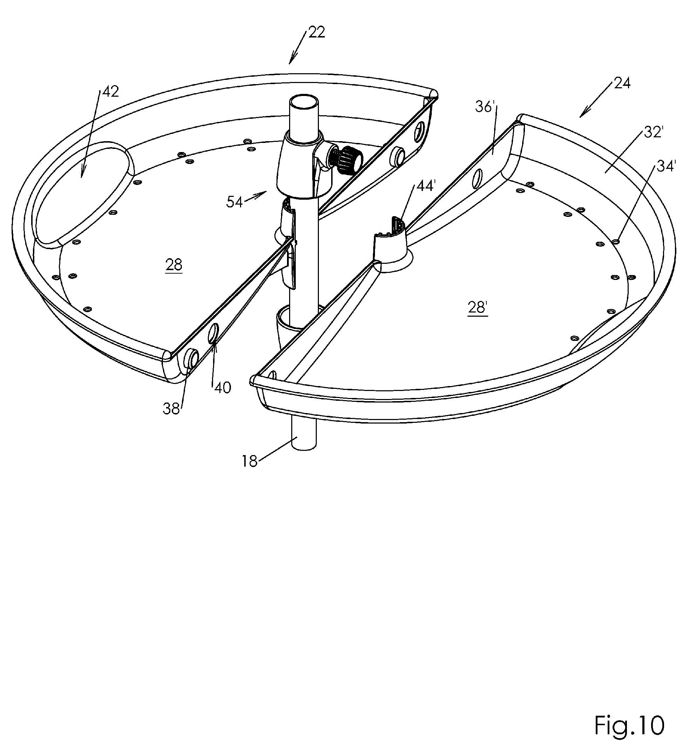

Figure 10 is a perspective view illustrating assembly of the two seed tray members;

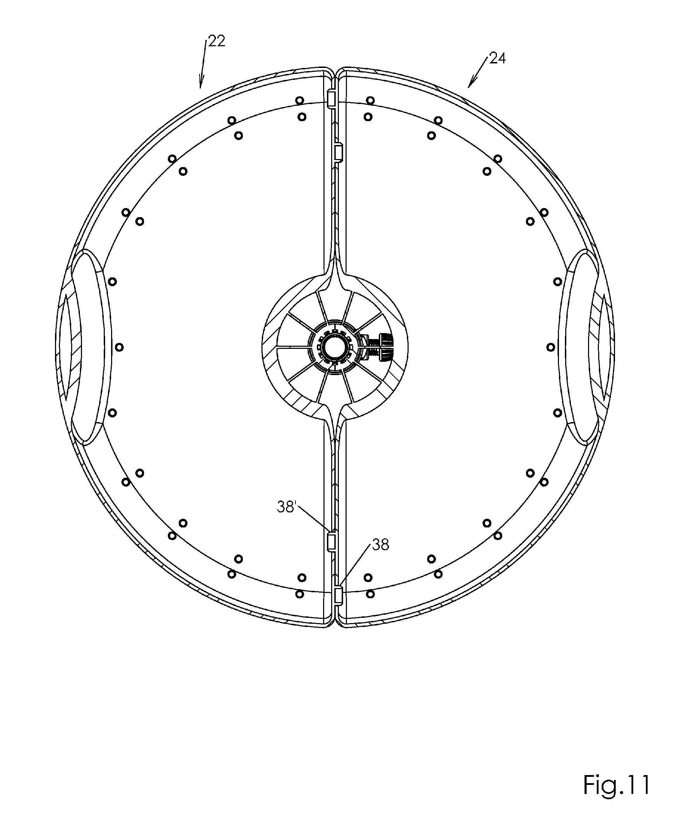

Figure 11 is a top plan view thereof;

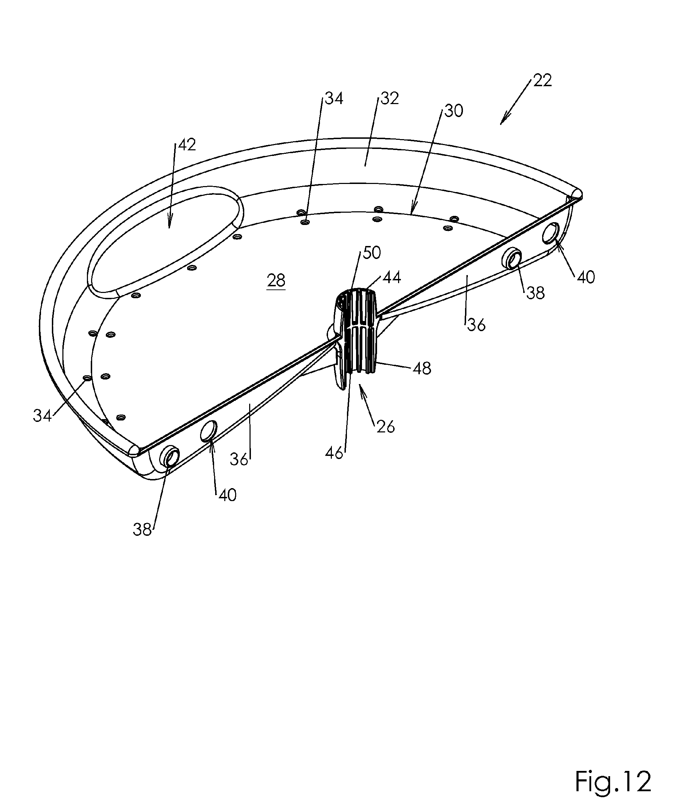

Figure 12 is a perspective view of one of the seed tray members;

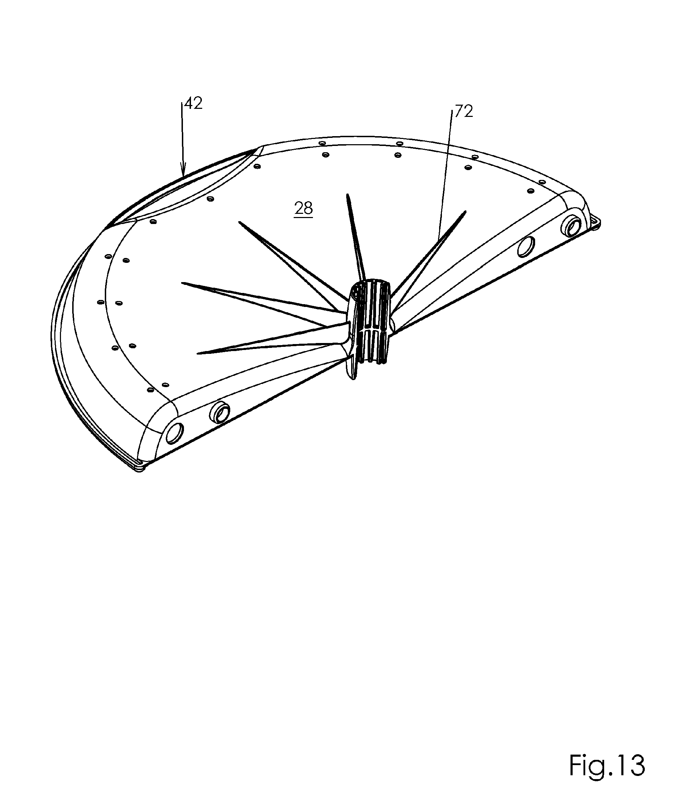

Figure 13 is a bottom perspective view thereof; and

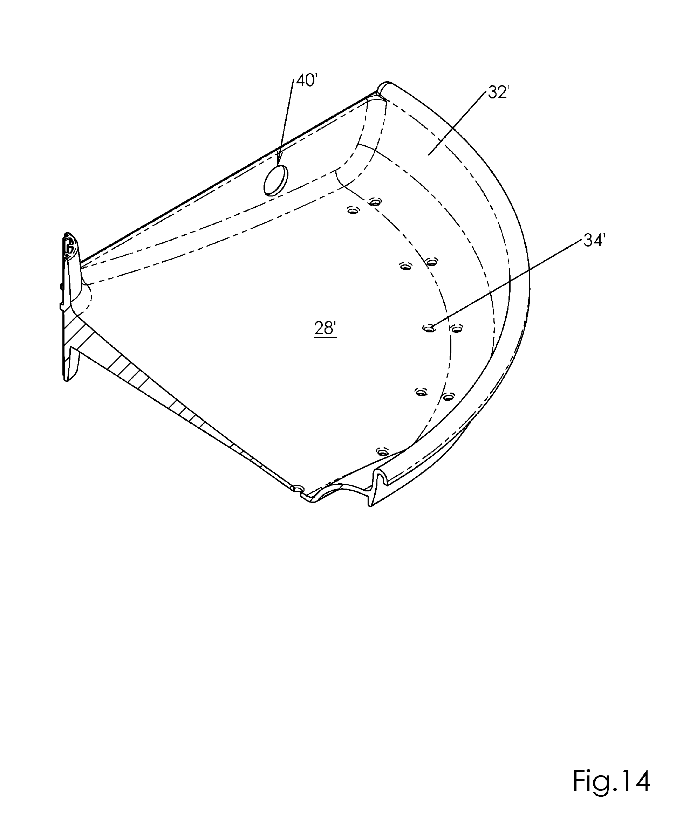

Figure 14 is a perspective view of a portion of a seed tray member.

### DETAILED DESCRIPTION OF THE INVENTION

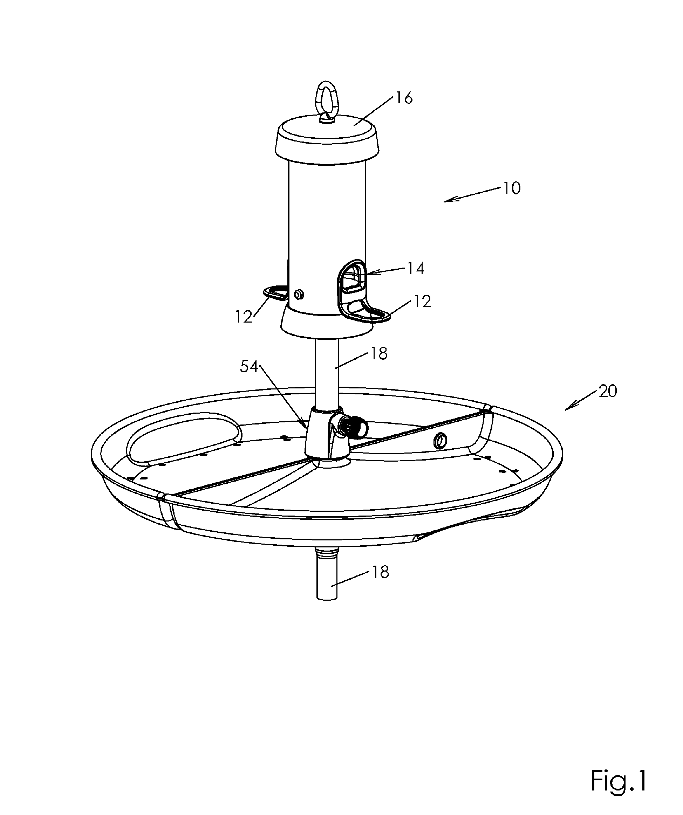

Referring to the drawings in greater detail and by reference characters thereto, there is illustrated in Figure 1 a bird feeder which is generally designated by reference numeral 10. Bird feeder 10, as is conventional, has a perch 12 located adjacent a seed port 14. The bird feeder 10 further includes a cover 16. Bird feeder 10 is mounted on a pole 18.

The present invention provides a seed tray which is generally designated by reference numeral 20. Seed tray 20 is comprised of a first seed tray half 22 and a second seed tray half 24 which together form the complete seed tray 20. As both seed halves 22, 24 are substantial mirror images, only one will be described herein with reference numerals with a prime being utilized for the remaining seed tray half.

As may be seen, seed tray half 22 includes a semi-circular recess 26 so as to permit the seed tray half 22 to fit about pole 18. Seed tray half 22 has a downwardly sloping base 28 which terminates at periphery 30. At periphery 30, the base continues into an upwardly extending perimeter wall 32. A plurality of drainage apertures 34 are provided proximate periphery 30 to permit drainage of water therethrough. Reinforcing flanges or ribs 72 are formed on the underside of base 28

Seed tray half 22 includes a side wall 36 where it meets second seed tray half 24. Side wall 36 includes projections 38 and apertures 40 such that the seed tray halves may fit together and be (at least temporarily) retained together.

Formed within upwardly extending wall 32 is a recessed portion which forms a hand hold 42. Hand hold 42 permits the easier manipulation of the seed tray halves 22, 24 when either assembling them together or disassembling.

About semi-circular recess 26 there is provided a downwardly extending wall 48 which will mate with downwardly extending wall 48' to form a circular enclosure about pole 18. A plurality of ribs 46 are provided on downwardly extending wall 48. There is also provided an upwardly extending wall 44 which likewise has ribs 50 formed thereon.

The invention includes an upper seed tray support member or upper collar 54 and a lower seed tray support member or lower collar 56. Each collar is substantially identical in structure and thus, only one will be described herein with the other having reference numbers with a prime.

Lower collar 56 includes a side wall 58 which has tapering ribs 60 formed on an inner surface thereof. Within side wall 58, there is provided an aperture 62 having threads 64 formed thereon. A set screw shaft 66 has threads 68 which are designed to engage with threads 64. Set screw shaft 66 includes a relatively large head 70 for rotation thereof.

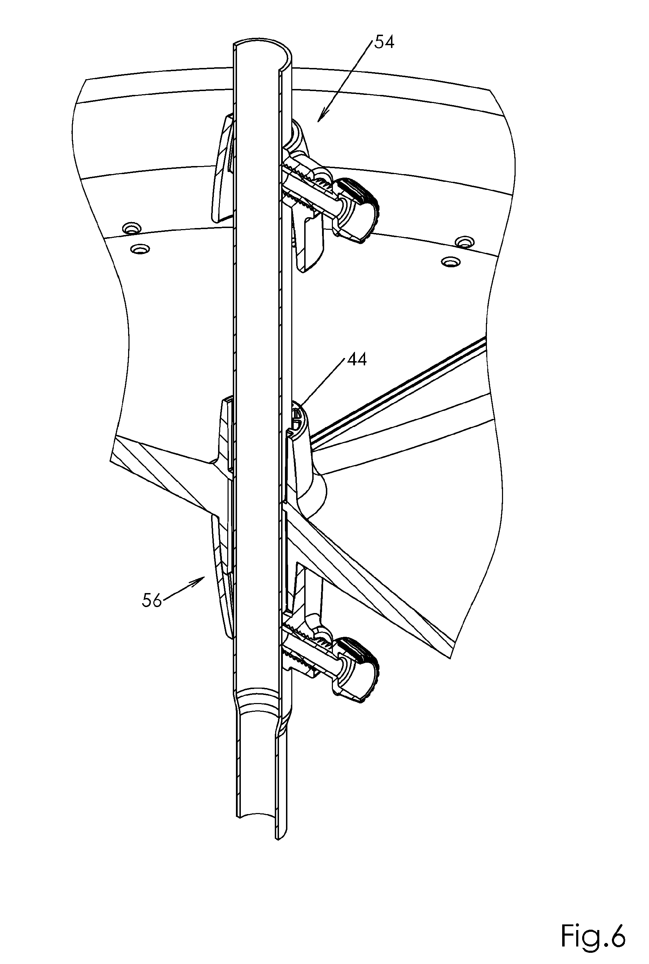

As may be seen in Figure 6, when assembling the seed tray or when moving the same to a different position, upper collar 54 is temporarily maintained above the seed tray as shown in Figure 6. Lower set screw 66' may be loosened and the seed tray moved to the desired position. Following the positioning of the same and tightening of set screw 66', upper collar 54 will be moved into position and set screw 66 tightened.

## Claims

1. A seed tray comprising:
first and second seed tray members, said first and second seed tray members being securable together about said pole; and
a first seed tray support located beneath said first and second seed tray members, said first seed tray support being slidable along said pole and lockable in a desired position with respect to said pole, said first seed tray support engaging with said first and second seed tray members to retain said first and second seed tray members together.

2. The seed tray of Claim 1 wherein each of said first and second seed tray members comprises one half of said seed tray.

3. The seed tray of Claim 2 wherein each of said first and second seed tray members has at least one projection and at least one recess, said projections and recesses being arranged to mate with one another.

4. The seed tray of Claim 3 including a plurality of said projections and said recesses.

5. The seed tray of Claim 1 wherein each of said first and second seed tray members includes a half circle recess to receive said pole, a downwardly extending wall about each of said recesses to fit about said pole.

6. The seed tray of Claim 5 wherein said first seed tray support is sized to fit around said downwardly extending walls to lock said first and second seed tray members together.

7. The seed tray of Claim 5 wherein each of said first and second seed tray members further includes an upwardly extending wall about each of said recesses to fit about said pole, and an upper support member to fit around said upwardly extending walls to lock said first and second seed tray members together.

8. The seed tray of Claim 7 wherein each of said first and second seed tray supports comprise a collar having a set screw to engage with said pole.

9. The seed tray of Claim 1 wherein each tray has a base portion sloping downwardly from a central portion thereof.

10. The seed tray of Claim 9 wherein each seed tray has an upwardly extending wall at a peripheral edge of said base portion.

11. The seed tray of Claim 10 further including drainage apertures formed at a periphery of said base portion.

12. The seed tray of Claim 9 wherein said base portion has a plurality of reinforcing ribs on a bottom surface thereof.

13. The seed tray of Claim 10 further including a recessed portion formed in each of said upwardly extending walls to provide a place for gripping said tray.
